# EUROPEAN PATENT SPECIFICATION

(11) **EP 1 043 179 B1**
(45) Date of publication and mention of the grant of the patent: **26.10.2005**
(21) Application number: 00107151.3
(22) Date of filing: 10.04.2000
(51) Int. Cl.: B60C 23/04

(54) **System for monitoring tire pressure of a vehicle**
System zur Luftdruckkontrolle von Fahrzeugreifen
Système de contrôle de la pression des pneumatiques d'un véhicule

(30) Priority: 09.04.1999 US 289440
(43) Date of publication of application: 11.10.2000
(73) Proprietor: Delphi Technologies, Inc., Troy, MI 48098 (US)
(72) Inventor: Simon, Marc Raymond, Whitefish Bay, Wisconsin 53211 (US); Lhomme, Francois, 67202 Wolfisheim (FR); Leligne, Christophe, 67120 Wolxheim (FR); Perino, Didier, 92150 Suresnes (FR)
(74) Representative: Wagner, Karl H.

(56) References cited:
- WO-A-98/15964
- US-A- 5 335 540

## Description

### Background Of The Invention

The present invention relates to apparatus for sensing pressure on air inside a pneumatic tire mounted on a vehicle, and more particularly to such apparatus which perform the pressure sensing while the vehicle is in motion.

Vehicles such as automobiles, trucks and trailers have pneumatic tires which are inflated with air. The tires have to be inflated to the proper pressure in order to provide maximum operating life and optimum fuel economy. Over time air tends to leak out of the tire, thus the driver must periodically check the pressure and pump air into the tire to maintain the proper operating pressure. Drivers tend to neglect to monitor the tire pressure and thus can operate the vehicle for a considerable time with improperly inflated tires. Thus there is a need to be able to sense tire pressure and provide an indication to the driver.

Previously tire pressure monitoring devices have been incorporated into the wheels of motor vehicles. Such devices usually had a sensor that provided an indication of whether the tire pressure was below a predetermined level. A common type of monitoring device included a passive radio frequency transponder which could be interrogated by a transceiver either on the motor vehicle or at a stationary location past which the vehicle was driven. The transceiver emitted a radio frequency signal that activated the transponder which replied in a manner that indicated whether the tire pressure was excessively low. One type of transponder was a circuit that resonated at the tuned frequency of the transceiver signal when the pressure was improper. This resonance changed the loading on the transceiver which was detected.

A drawback of such a system is that the transponder for each tire on a motor vehicle had to be tuned to resonate at a different frequency in order that the transponders did not interfere with each other and so that the transceiver could determine which tire had a pressure problem. This became increasing difficult on a vehicle such as a semi-trailer which could have 18 tires. In addition, a tire transponder on one vehicle may interfere with pressure sensing by a nearby vehicle. Thus a better communication protocol is desirable.

Bidirectional radio frequency communication has been used for some time in cordless telephones. The term "cordless telephone" as used in the telecommunication industry, means a telephone comprising a base station and a hand-held transceiver unit. The base station is connected by wires to a terrestrial telephone line serving the owner's premises. A hand-held transceiver carried by the user communicates by radio frequency signals with the single base station that is up to approximately 300 meters away.

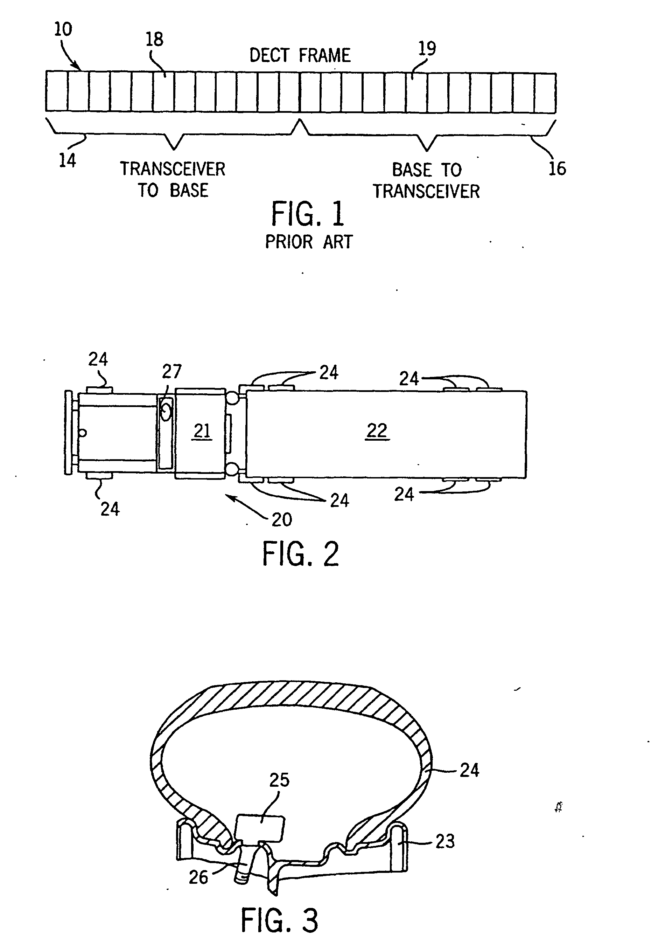

The Digital Enhanced Cordless Telecommunications (DECT) protocol was developed in the mid-1980's as a pan-European standard for cordless telephones and has been adapted for use outside the European Union. The DECT standard protocol has been used for simultaneous bidirectional communication between a base station and a hand-held transceiver of cordless telephones. This standard utilizes ten frequencies for communication. The exchange of signals over each frequency is divided into repetitive frames 10, each being ten milliseconds in duration and subdivided into twenty-four time slots, as shown in Figure 1. The twelve time slots in the first half 14 of each frame are used for communication from a hand-held transceiver to the associated base station, while the twelve time slots in the second frame half 16 are used for communication from the base station and the hand-held transceiver. It should be noted that different regions of the world have implemented the DECT protocol is slightly different manners. For example, in some regions the frequencies and the number of time slots in each message frame may differ.

When a user desires to use activates the cordless telephone to make an outgoing call, the hand-held transceiver searches for a frequency that has a matching time slots in each frame half which are not being used by another cordless telephone system. This is accomplished by the hand-held transceiver listening for digital signals being sent in each time slot of the frame at each of the assigned frequencies. When a vacant pair of time slots, such as 18 and 19, is found, the hand-held transceiver sends a message initiation signal on the selected frequency during time slot 18 in the first half of a message frame.

While the hand-held transceiver is performing these functions, the base station is scanning the ten frequencies and listening during each of the twelve time slots in the first half 14 of the message frames at each frequency. When the base station hears a message initiation signal that is addressed to it, i.e. containing the proper identification data, the base station sends a response to the transceiver in the associated time slot 19 in the second half 16 of a frame at the same frequency and bidirectional communication is established. A reverse procedure occurs when the base station receives an incoming call via the terrestrial telephone line.

US 55335540 discloses a method and apparatus for measuring a physical quantity, more specifically tire pressures and temperatures. The values representing pressure and temperature are transmitted to a central receiver. US 5335540 discloses that a signal is developed in response to a respective physical quantity, property or condition, e.g. a pressure. That signal is sampled to produce an instantaneous signal value and a first code is assigned to said instantaneous signal value. Subsequently a transmission including the code and an identifier unique to the circuit is transmitted. A received transmission from each of said plurality of measurement and transmission circuits which had developed said signal responsive to a respective physical quantity, property or condition is received and said identifier and said code are extracted from said received transmission. Subsequently it is determined which identifier had been received and a representation of the received code is displayed while an identification of the received code is provided.

In accordance with the present invention, an apparatus and a method for monitoring pressure within a tire of a vehicle as set forth in a claim 1 and claim 15, respectively, is provided. Preferred embodiments of the invention are disclosed in the dependent claims.

### Summary Of The Invention

A general object of the present invention is to provide an apparatus for measuring the inflation pressure of tires mounted on a vehicle and provide an indication of that pressure to the driver.

Another object is to provide such as apparatus with the capability to sense tire pressure while the vehicle is moving.

A further aspect of the present invention is to provide a wireless tire pressure sensing apparatus.

These and other objectives are satisfied by a tire pressure monitoring system that includes a sensor which detects a pressure within the tire. A transmitter connected to the sensor wirelessly sends a signal using the Digital Enhanced Cordless Telecommunication (DECT) protocol. That signal contains an indication of the tire pressure. In the preferred embodiment of the system, the signal from the transmitter also contains a unique identification number associated with the particular tire. This enables the particular tire of the vehicle to be identified in the event servicing is required.

A receiver in a control circuit of the monitoring system receives the signals sent using the Digital Enhanced Cordless Telecommunications protocol. From those signals, the receiver recovers the indication of the pressure. The DECT protocol reduces the possibility that the pressure monitoring will be interfered with by similar monitoring systems in nearby vehicles.

### Brief Description Of The Drawings

FIGURE 1 depicts a message frame of the Digital Enhanced Cordless Telecommunications wireless telephone protocol;
FIGURE 2 is a pictorial diagram of a motor vehicle which incorporates the present invention;
FIGURE 3 is a cross section through a tire mounted on a wheel of the vehicle; and
FIGURE 4 is a block schematic diagram of a system for monitoring the pressure of tires on the vehicle.

### Detailed Description Of The Invention

With initial reference to Figure 2, the present tire pressure monitoring system is incorporated into a motor vehicle, such as a semi-trailer truck 20 with a tractor 21 and an articulated trailer 22. A plurality of wheels with pneumatic tires 24 are provided on both the tractor and the trailer.

Figure 3 depicts a partial cross section through one of the rubber tires 24 mounted on a metal wheel 23 in a conventional manner. The wheel 23 includes pressure monitor 25 that includes a conventional valve stem 26 through which the tire can be inflated. The pressure monitor 25 further comprises a sensor for measuring the tire pressure and a circuit for communicating that measurement to a truck control circuit 27 within the tractor 21 (Figure 2), as will be described.

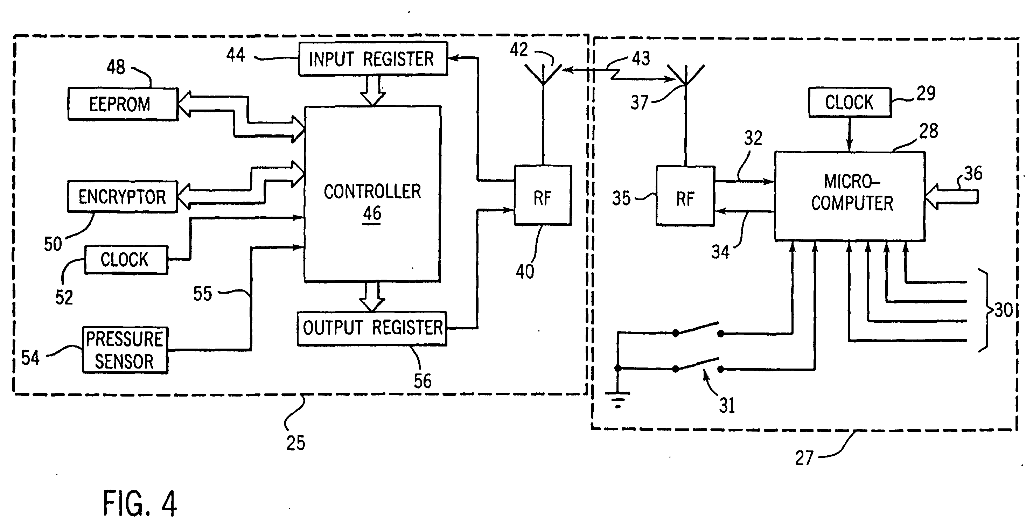

With reference to Figure 4, the truck control circuit 27 includes a microcomputer 28 with an internal microprocessor, a memory in which the control program and data are stored, and input/output circuits. A standard clock circuit 29 supplies timing pulses to the microcomputer 28. A service technician is able to place the microcomputer into different functional modes and configurations by operating a plurality of manual input switches 31. Alternatively the configuration of the control circuit 27 can be defined by downloading data via the radio frequency link.

The truck control circuit 27 operates numerous functions on the motor vehicle 20, such as monitoring engine performance and displaying the operating parameters to the driver. For that functionality, the microcomputer 28 is interfaced via input lines 30 to the corresponding sensing devices on the motor vehicle. The values of the operating parameter are sent via a parallel communication bus 36 to a dashboard display module (not shown). The communication bus 36 also interfaces the truck control circuit 27 with other computer systems on the motor vehicle 20.

The truck control circuit 27 also includes circuits that are dedicated to monitoring the pressures of the tires 24. A serial output port 32 and a serial input port 34 of the microcomputer 28 are connected to a first radio frequency transceiver 35 which utilizes the Digital Enhanced Cordless Telecommunications (DECT) protocol. In a general sense, the first radio frequency (RF) transceiver 35 contains a transmitter that modulates a standard RF frequency carrier with the serial digital data received from output port 32 and transmits that modulated radio frequency signal via an antenna 37. The first transceiver 35 also includes a receiver that demodulates radio frequency signals received by the antenna 37 to recover serial digital data carried by that signal. The recovered data is sent to the microcomputer input port 34.

The first transceiver 35 of the truck control circuit 27 is designed to communicate with a second radio frequency transceiver 40 and antenna 42 both located within the pressure monitors 25 in every tire 24. As will be described, both transceivers 40 and 35 are designed to utilize the DECT protocol and are similar to devices found in cordless telephones. The second transceiver 40 has a receiver which demodulates the received radio frequency signal to recover digital data carried by that signal and the recovered data is sent in a serial format to an input register 44. The input register 44 converts the serial data stream from the second transceiver 40 into a parallel format which is read by a controller 46. The controller 46 may be a hardwired device that sequentially performs the pressure monitoring procedure to be described or a programmable device which executes a software program to implement that procedure. The pressure monitor controller 46 is connected to an electrically erasable programmable read only memory (EEPROM) 48 which stores identification data to be transmitted to the truck control circuit 27 when the pressure monitor 25 is interrogated.

The pressure monitor 25 has a clock circuit 52 which provides timing signals to the controller 46. The pressure monitor 25 also includes an encryptor 50 connected to the controller 46 to encrypt a pressure monitor security number for transmission to the truck control circuit 27. The encryptor 50 utilizes a secret-key cryptography algorithm to encrypt data for sending to the control circuit. For example the algorithm specifies a sequence of a plurality of logical operations which are performed on a known seed number and a challenge number received from the control circuit to produce a resultant number for transmission by the pressure monitor. Several suitable cryptography algorithms are described by Mehrdad Foroozesh in an article entitled "Protecting Your Data With Cryptography," *UNIX Review*, November 1996, volume 14, number 12, page 55(6), which description is incorporated herein by reference. Such encryption techniques and algorithms are commonly used to encrypt computer data being transmitted over common carriers. It should be understood that other encryption techniques may be used.

The tire pressure is measured by a pressure sensor 54 that is coupled to an input of the controller 46. The pressure sensor 54 may be similar to the sensors used in previous passive transponder type tire pressure monitors. The pressure sensor 54 can merely produce a binary output signal on line 55 which indicates whether the tire is below a predefined pressure threshold level and thus requires inflation. The pressure monitor 25 transmits that low pressure indication to the truck control circuit 27. Alternatively, the pressure sensor 54 can produce a analog signal on line 55 which indicates the actual tire pressure. An analog to digital converter within the controller 46 then digitizes the analog pressure signal. In this latter case, the actual tire pressure is transmitted by the pressure monitor 25 to the truck control circuit 27.

Digital output data is sent by the controller 46 in parallel form to a parallel-in/serial-out output register 56. The serial data from the output register 56 is applied to the input of a transmitter within the second transceiver 40 which modulates a radio frequency signal which that data. The resultant RF signal is sent via the antenna 42 to the truck control circuit 27. The components of the pressure monitor preferably are powered by a battery (not shown).

Periodically the truck control circuit 27 contacts the pressure monitor 25 in each tire to read the associated pressure indication. Each pressure monitor 25 on the motor vehicle 20 is assigned a unique identification number that is stored in EEPROM 48 and the microcomputer 28 also stores a list of the monitor identification numbers for the tires mounted on the particular motor vehicle. The truck control circuit 27 sequentially sends an interrogation signal to each pressure monitor 25.

The truck control circuit 27 sends a given interrogation signal sequentially on all ten of the DECT frequencies. This process begins by scanning each of the ten DECT frequencies. If the control circuit 27 does not hear a message frame on a given frequency, then it forms a new message frame and selects an arbitrary pair of time slots to use. If a particular frequency already is carrying DECT messages, the truck control circuit 27 listens during the message frames for an available pair of frame slots, one that does not already contain message data. If none is found, the truck control circuit 27 selects the next DECT frequency. When an available pair of time slots, such as the third time slots 18 and 19 in each half of the message frame shown in Figure 1, is found, the truck control circuit 27 transmits the message in the time slot 19 during the second half 16 of the message frame and listens for a reply in time slot 18 during the first half of subsequent frames.

The control circuit's microcomputer 28 determines whether a reply signal has been received and if so, whether the reply signal contains same pressure monitor identification number that was transmitted in the interrogation signal. If either is not the case, the program execution returns to send an interrogation signal to another tire pressure monitor for the motor vehicle.

While this is occurring, pressure monitor 25 is listening on a single DECT frequency for a interrogation signal which contains its identification number. Alternatively, the interrogation signal could be sent by the control circuit 27 on a single one of the DECT frequencies and the pressure monitor 25 could scan all of the DECT frequencies listening for that signal. However, with this latter approach the pressure monitor 25 consumes more power which drains its battery faster.

When a given pressure monitor 25 receives an interrogation signal containing its identification number, its controller 46 responds by reading the tire pressure indication from the pressure sensor 54. A reply message is formulated by the controller 46 which contains the pressure monitor's unique identification number and the tire pressure indication. The reply message is sent at the same frequency as the interrogation signal and during a time slot (e.g. 18) in the first half of a message frame that corresponds to the time slot (e.g. 19) of the second frame half that contained the interrogation signal. Specifically, the reply data is sent via output register 56 to the second transceiver 40 from which it is transmitted to the control circuit 27 in the adjacent motor vehicle. As noted previously, any of several well known data encryption algorithms may be employed to exchange data between the control circuit 27 and the pressure monitor 25 for greater robustness against interference.

Upon receiving the reply message, the control circuit 27 passes the signal to the microcomputer 28 which verifies that the message is from the proper pressure monitor 25 that is to be interrogated. If so, the tire pressure indication is extracted and inspected to determine if the pressure is within an acceptable operating range. When the pressure is outside that operating range, the microcomputer 28 sends a warning message via communication bus 36 to the display module on the dashboard to alert the driver. That warning message identifies the specific tire that is affected.

By employing the DECT bidirectional communication protocol to exchange the tire pressure data, the present system minimizes any possibility of interference among the monitors on the same vehicle and with similar monitors on adjacent vehicles. Even if another vehicle, that is stopped along side the truck 20, is interrogating its tire pressure monitors at the same time as the truck, the other vehicle will be using a different set of DECT message frame slots and thus the two vehicle systems will be able to distinguish which messages are from its tire pressure monitors. In addition, the transmission of the unique identification numbers in message to and from the pressure monitors further reduce the possibility of interference from adjacent devices and enable the control circuit to identify messages related to its monitors.

Alternatively a different technique may be employed to differentiate among the pressure monitors in the tires on the motor vehicle. As noted previously, the standard DECT protocol utilizes a message frame 10 in Figure 1 that has twelve pairs of time slots for sending data in each direction between pressure monitors 25 and the truck control circuit 27. Thus each one of up to twelve pressure monitors 25 can be assigned a unique pair of frame time slots in which to communicate with the truck control circuit.

In this situation, the truck control circuit 27 sequentially sends the interrogation signal in each of the twelve time slots in the second half 16 of successive DECT message frames. After sending an interrogation signal in a time slot, the truck control circuit 27 listens for a reply in the corresponding time slot of the first half 14 of the next few message frames.

When a pressure monitor 25 hears an interrogation signal in the message frame time slot to which it is assigned, the controller 46 obtains the pressure indication from the pressure sensor 54. The pressure indication and the identification number for the pressure monitor 25 then are sent as a reply message in the corresponding frame in the first half 14 of the message frame. The control circuit 27 responds to receiving the reply message in the same manner as described previously.

The present system also can deter theft of the tires. In this case the truck control circuit 27 periodically interrogates the pressure monitor 25 even when the truck is not operating. If the truck control circuit 27 fails to receive a reply from a given pressure monitor 25 or if the signal strength of the reply drops below a predefined level, the microcomputer 28 in the truck control circuit 27 activates an alarm via conductors 30. For example the microcomputer 28 can activate a conventional anti-theft alarm of the truck or directly honk the truck's horn and flash the headlights.

## Claims

1. An apparatus for wirelessly monitoring pressure within a tire (24) of a vehicle (20), that apparatus comprising:
a sensor (54) which detects a pressure within the tire;
transmitter (40) connected to the sensor (54) to wirelessly send a signal using the Digital Enhanced Cordless Telecommunication protocol wherein the signal includes an indication of the pressure; and
receiver (35) for receiving signals sent using the Digital Enhanced Cordless Telecommunication protocol, and which receives the signal from the transmitter and recovers the indication of the pressure.

2. The apparatus recited in claim 1 further comprising a first storage device (48) for an identification number associated with the sensor; and wherein the transmitter (40) also sends the identification number.

3. The apparatus as recited in claim 2 further comprising a second storage device (28) which contains a reference identification number; and a comparator (28) connected to the second storage device and to the receiver (35) for comparing the identification number from the receiver with the reference identification number.

4. The apparatus as recited in claim 3 further comprising a processor (28) which processes the indication of the pressure received from the transmitter in response to the comparator.

5. The apparatus as recited in claim 1 wherein the sensor (54) measures the pressure within the tire and produces a pressure value; and the signal sent by the transmitter (54) includes the pressure value.

6. The apparatus as recited in claim 1 wherein the sensor (54) produces the indication of the pressure in response to a relationship of the pressure to a threshold level.

7. The apparatus as recited in claim 1 further comprising an alarm (30) which is activated by the receiver (35) failing to receive a signal from the transmitter (40).

8. A method for monitoring pressure within a tire (24) of a vehicle (20), that method comprising:
detecting a pressure within the tire (14);
wirelessly transmitting a signal using the Digital Enhanced Cordless Telecommunication protocol, wherein the signal includes an indication of the pressure; and
receiving the signal sent using the Digital Enhanced Cordless Telecommunication protocol, and recovering the indication of the pressure.

9. The method as recited in claim 8 wherein detecting a pressure comprises measuring the pressure within the tire (24) to produce a pressure measurement value; and wherein wirelessly transmitting comprises sending pressure measurement value.

10. The method as recited in claim 8 wherein detecting a pressure comprises producing the indication of the pressure in response to a relationship of pressure within the tire (24) to a threshold level.

11. The method as recited in claim 8 further comprising sending an identification number associated with the tire (24) along with the indication of the pressure.

12. The method as recited in claim 11 further comprising comparing the identification number sent with the indication of the pressure to a reference identification number.

13. The method recited in claim 12 further comprising when the identification number sent with the indication of the pressure matches the reference identification number, then processing the indication of the pressure that was recovered from the signal.

14. The method recited in claim 8 further comprising transmitting an interrogation signal from the vehicle (20); and wherein the step of wirelessly transmitting is performed in response to the interrogation signal.

15. The method as recited in claim 14 further comprising assigning an identification number to the tire (24) and wherein the interrogation signal includes the identification number.

## Patentansprüche

1. Vorrichtung zur drahtlosen Überwachung des Drucks innerhalb eines Reifens (24) eines Fahrzeugs (20), wobei die Vorrichtung Folgendes aufweist:
Einen ein Druck innerhalb des Reifens detektierenden Sensor (54);
einen mit dem Sensor (54) verbundenen Sender (40) zum drahtlosen Senden eines Signals unter Verwendung des "Digital Enhanced Cordless Telecommunication Protocol", wobei das Signal eine Anzeige des Drucks enthält; und
einen Empfänger (35) zum Empfang der unter Verwendung des "Digital Enhanced Cordless Telecommunication Protocol" gesendeten Signale und, wobei der Empfänger das Signal vom Sender empfängt und die Anzeige des Drucks wiedergewinnt.

2. Vorrichtung nach Anspruch 1, wobei ferner eine erste Speichervorrichtung (48) vorgesehen ist, und zwar für eine Identifikationsnummer assoziiert mit dem Sensor und, wobei der Sender (40) auch die Identifikationsnummer sendet.

3. Vorrichtung nach Anspruch 2, wobei ferner Folgendes vorgesehen ist:
Eine zweite Speichervorrichtung (28), die eine Bezugsidentifikationsnummer enthält; und
ein Komparator (28) verbunden mit der zweiten Speichervorrichtung und dem Empfänger (35) zum Vergleichen der Identifikationsnummer vom Empfänger mit der Bezugsidentifikationsnummer.

4. Vorrichtung nach Anspruch 3, wobei ferner ein Prozessor (28) vorgesehen ist, der die Anzeige des Drucks empfangen von dem Sender ansprechend auf den Komparator verarbeitet.

5. Vorrichtung nach Anspruch 1, wobei der Sensor (54) den Druck im Reifen misst und einen Druckwert erzeugt; und wobei ferner das durch den Sender (54) gesendete Signal den Druckwert enthält.

6. Vorrichtung nach Anspruch 1, wobei der Sensor (54) die Anzeige des Drucks ansprechend auf eine Beziehung des Drucks gegenüber einem Schwellenpegel erzeugt.

7. Vorrichtung nach Anspruch 1, wobei ferner ein Alarm (30) vorgesehen ist, der durch den Empfänger (35) aktiviert wird, wenn kein Signal vom Sender (40) empfangen wird.

8. Verfahren zur Überwachung eines Drucks in einem Reifen (24) eines Fahrzeugs (20), wobei Folgendes vorgesehen ist:
Detektieren eines Drucks im Reifen (14),
drahtlose Übertragung eines Signals unter Verwendung des "Digital Enhanced Cordless Telecommunication Protocol", wobei das Signal eine Anzeige des Drucks aufweist; und
Empfangen des unter Verwendung des "Digital Enhanced Cordless Telecommunication Protocol" gesendeten Signals und Wiedergewinnung der Anzeige des Drucks (9).

9. Ein Verfahren nach Anspruch 8, wobei das Detektieren eines Drucks Folgendes aufweist: Messen des Drucks innerhalb des Reifens (24) zur Erzeugung eines Druckmesswertes; und
wobei die drahtlose Übertragung das Senden des Druckmesswertes aufweist.

10. Verfahren nach Anspruch 8, wobei das Detektieren eines Drucks die Erzeugung der Anzeige des Drucks ansprechend auf eine Beziehung des Drucks innerhalb des Reifens (24) gegenüber einem Schwellenpegel aufweist.

11. Verfahren nach Anspruch 8, wobei ferner das Senden einer Identifikationnummer, die mit dem Reifen (24) assoziiert ist, zusammen mit der Druckanzeige vorgesehen ist.

12. Verfahren nach Anspruch 11, wobei ferner der Vergleich der mit der Anzeige des Drucks gesendeten Identifikationsnummer mit einer Bezugsidentifikationsnummer vorgesehen ist.

13. Verfahren nach Anspruch 12, wobei Folgendes vorgesehen ist: Wenn die ldentifikationsnummer, die mit der Anzeige des Drucks gesendet wird, mit der Bezugsidentifikationsnummer übereinstimmt, darauffolgendes Verarbeiten der aus dem Signal wiedergewonnen Anzeige des Drucks.

14. Verfahren nach Anspruch 8, wobei ferner Folgendes vorgesehen ist:
Senden eines Abfragesignals vom Fahrzeug (20); und
wobei der Schritt der drahtlosen Übertragung ansprechend auf das Abfragesignals ausgeführt wird.

15. Verfahren nach Anspruch 14, wobei ferner Folgendes vorgesehen ist:
Zuweisung einer Identifikationsnummer zu dem Reifen (24), wobei das Abfragesignal die Identifikationsnummer umfasst.

## Revendications

1. Dispositif de télésurveillance de la pression dans un pneumatique (24) d'un véhicule (20), cet appareil comprenant :
un capteur (54) qui détecte la pression dans le pneumatique ;
un émetteur (40) connecté au capteur (54) pour envoyer, sans fil, un signal en utilisant le protocole numérique de télécommunication sans fil amélioré (Digital Enhanced Cordless Telecommunication protocol) dans lequel le signal comprend une indication de la pression ; et
un récepteur (35) pour recevoir les signaux en utilisant le protocole numérique de télécommunication sans fil amélioré, et qui reçoit le signal de l'émetteur et récupère l'indication de pression.

2. Dispositif selon la revendication 1, comprenant en outre un premier dispositif mémoire (48) pour un numéro d'identification associé au capteur, et dans lequel l'émetteur (40) envoie également le numéro d'identification.

3. Dispositif selon la revendication 2, comprenant en outre un second dispositif mémoire (28) qui comprend un numéro d'identification de référence, et un comparateur (28) connecté au second dispositif de mémorisation et au récepteur (35) pour comparer le numéro d'identification du récepteur au numéro d'identification de référence.

4. Dispositif selon la revendication 3, comprenant en outre un processeur (28) qui traite l'indication de pression reçue de l'émetteur en réponse au comparateur.

5. Dispositif selon la revendication 1, dans lequel le capteur (54) mesure la pression dans le pneumatique et produit une valeur de pression, et le signal envoyé par l'émetteur (54) inclut la valeur de pression.

6. Dispositif selon la revendication 1, dans lequel le capteur (54) produit l'indication de pression en réponse à une relation entre la pression et un niveau de seuil.

7. Dispositif selon la revendication 1, comprenant en outre une alarme (30) qui est activée par le récepteur (35) quand il ne reçoit pas de signal de l'émetteur (40).

8. Procédé de surveillance de la pression dans un pneumatique (24) d'un véhicule (20), ce procédé comprenant les étapes suivantes :
détecter la pression dans le pneumatique (24) ;
émettre sans fil un signal en utilisant le protocole numérique de télécommunication sans fil amélioré, dans lequel le signal comprend une indication de la pression ; et
recevoir le signal envoyé en utilisant le protocole numérique de télécommunication sans fil amélioré, et récupérer l'indication de pression.

9. Procédé selon la revendication 8, dans lequel la détection de pression comprend la mesure de la pression dans le pneumatique (24) pour produire une valeur de mesure de pression; et dans lequel l'émission sans fil comprend l'envoi de la valeur de mesure de pression.

10. Procédé selon la revendication 8, dans lequel la détection de la pression comprend la production d'une indication de la pression en réponse à une relation entre la pression dans le pneumatique (24) et un niveau de seuil.

11. Procédé selon la revendication 8, comprenant en outre l'envoi d'un numéro d'identification associé au pneumatique (24) en même temps que l'indication de pression.

12. Procédé selon la revendication 11, comprenant en outre une comparaison du numéro d'identification envoyé avec l'indication de pression et d'un numéro d'identification de référence.

13. Procédé selon la revendication 12, comprenant en outre, quand le numéro d'identification envoyé avec l'indication de pression concorde avec le numéro d'identification de référence, le traitement de l'indication de pression qui a été récupérée à partir du signal.

14. Procédé selon la revendication 8, comprenant en outre l'émission d'un signal d'interrogation à partir du véhicule (20), et dans lequel l'étape d'émission sans fil est réalisée en réponse au signal d'interrogation.

15. Procédé selon la revendication 14, comprenant en outre l'affectation d'un numéro d'identification au pneumatique (24) et dans lequel le signal d'interrogation inclut le numéro d'identification.
